# EUROPEAN PATENT APPLICATION

(11) **EP 4 303 812 A1**
(43) Date of publication of application: **10.01.2024**
(21) Application number: 22182801.5
(22) Date of filing: 04.07.2022
(51) Int. Cl.: G06T 7/11, G06T 7/194, G06T 7/20

(54) **AN IMAGE PROCESSING SYSTEM AND METHOD FOR PROCESSING IMAGES FROM THE HEAD OF A PERSONAL CARE DEVICE**

(71) Applicant: Koninklijke Philips N.V., 5656 AG Eindhoven (NL)
(72) Inventor: PERRONE, Antonio Luigi, Eindhoven (NL); GERHARDT, Lutz Christian, Eindhoven (NL); JOHNSON, Mark Thomas, Eindhoven (NL)
(74) Representative: Philips Intellectual Property & Standards

(57) **Abstract**

An image processing system processes images received from an imaging device mounted at a head of a personal care device. The personal care device has personal care elements which can move relative to the imaging device while they implement their personal care function. Images are received over time of a user from the imaging device. The images are segmented and a three dimensional data is generated based on the time evolution of a shape of the segmentations. The 3D volume enables current motion characteristics of the personal care elements and/or future motion characteristics of the personal care elements to be determined.

## Description

### FIELD OF THE INVENTION

This invention relates to the integration of imaging into the head of a personal care device, such as an electric tooth brush, shaver or brush.

### BACKGROUND OF THE INVENTION

Cameras are becoming ubiquitous in the personal care sector generally, and specifically electric tooth brushes with integrated cameras are continuously appearing in the market. The camera images are for example processed to provide feedback to a user about their tooth brushing routine, or to provide diagnostic information. For example, caries and plaque may be determined. The imaging may also be used to determine the location of the oral care head within the oral cavity (more accurately than just with a motion sensor) so that the user's oral care routine may be analyzed more accurately. This information can be used to guide a consumer in such a manner that he/she reaches all locations during their oral care routine. A history of the oral health of the user may be collected.

Thus, imaging-assisted oral care devices can enable image based diagnostics, superior location sensing for a head of the oral care device, oral care therapy planning (e.g. orthodontics, aligners) or treatment monitoring (e.g. periodontitis). These new functions can be seamlessly integrated into the normal brushing hygiene regimen of a user, instead of requiring separate devices such as smart phones or dental endoscopes.

Other oral care devices such as cleaning mouthpieces and oral irrigators are also being developed with imaging functionality.

Similarly, a shaver or epilator may use imaging to detect the shaving or epilating performance or to detect skin condition. For example, imaging may be used to optimize the action and quality of the shaving (beard local directions, single hair geometry etc.), or epilating, to characterize skin type to suggest and optimize treatment, and to enable skin conditions forecasting such as pimple detection, pimple avoidance during shaving, pimples emergence forecasting, etc.

A hairbrush may also be equipped with imaging technology for example to enable a judgement to be made of hair condition. Integrated cameras in hairbrushes could be enablers in the field of cosmetics and personal health.

Additionally, in professional care services, it has been documented in the scientific literature that a disproportionate amount of the nurses' time (from 20% to 40% total) is occupied by direct patient care tasks. Any technology that enables a reduction in the time required for such tasks can substantially increment the nurses' productivity. Personal hygiene related tasks are a considerable proportion of such care (e.g. brushing teeth, shaving, brushing hair etc.). The use of imaging sensors in these brushing actions is an enabler for the optimization (i.e., time reduction) of such tasks. The imaging sensor and/or camera can help in the automation of the task (automated brushing using visual information) and in any pre-diagnostic analysis of the patient physiology.

With such devices, a new generation of problems arises relating to the information that these sensors can detect. In particular, camera-equipped brushing devices suffer from the drawback that the presence of the bristles results in interference and occlusion within the camera images. This is because the camera is located outside the head of the personal care device to avoid undue interference by the brush head geometry and composition (i.e. bristles). The same issue applies in the case of a shaver, if the blades are in the field of view of the imaging camera, because the camera is integrated into the shaving head. These issues also mean there are algorithmic complications arising from the image processing required to handle the complex images.

Acquiring images and video streams without such interference and occlusion would vastly improve both the quality of the user experience (usability of the images, enjoyability and aesthetics appeal) and the information quality and quantity that can be derived from the oral images themselves, for example for diagnostics use.

Miniaturized cameras can be easily placed almost everywhere in a device, such as the head of a personal care device. By way of example, in an electric toothbrush, the key design features are the type of oscillation (i.e. the in-plane vibrations of the toothbrush head) and the geometry of the bristles. There is a large variability in the geometry of the bristles because there are many different head types, specialized for specific purposes (gum types etc.) or simply because of new more optimized versions. The oscillation type is typically in a well-defined plane, e.g. a vertical plane (when brushing the sides of the teeth).

The oscillation mode results in the bristles contacting the teeth dragging and flexing during the oscillation, depending on the user's applied force and movement type. The problem is that this mechanical behavior will bring some bristles within the field of view of a camera mounted in the oral care device head. This obstruction or occlusion of the image is a problem to be addressed.

The positions, geometry, density etc. of the bristles change with the head type. It could be possible to design the camera and optics to have a minimal obstruction for the particular bristle characteristics, but this would result in a costly and laborious adaptation of the optics or camera design or mounting to the particular bristle design.

The use of a brush will also result in the hair being brushed causing an obstruction or occlusion to the underlying skin, if the skin condition is to be imaged.

The invention aims to address the problem in a more universal manner.

### SUMMARY OF THE INVENTION

The invention is defined by the claims.

According to examples in accordance with an aspect of the invention, there is provided an image processing system for processing images received from an imaging device, mounted at a head of a personal care device having personal care elements which can move relative to the imaging device to implement a personal care function, comprising:
a processor, which is configured to:
   receive a sequence of images over time of a user from the imaging device at the head of the personal care device;
   segment the personal care elements from the sequence of images;
   construct a three dimensional, 3D volume representing the time evolution of a 2D shape of the segmentations; and
   process the 3D volume to:
      determine user-induced motion characteristics of the personal care elements and/or the personal care device; and/or
      forecast future motion characteristics of the personal care elements and/or the personal care device.

The 3D volume essentially provides a time evolution of the presence/absence of the personal care elements in the field of view (FOV) of the imaging device, as captured in 2D images. Changes in the presence/absence are caused by user movements. For example, a user pressing a toothbrush against their teeth causes the bristles to flex into the FOV of the imaging device. In a second example, when a user uses a shaver, the plane of rotation of the shaver will adapt to the surface of the skin.

It has been realized that the time evolution can be processed to determine the user-induced motion characteristic and determine future motion characteristic of the personal care elements.

The imaging device may be, for example, a camera or a laser scanner. Other suitable imaging devices capable of capturing images of the user may be used.

The personal care elements are elements of the personal care device which are intended to carry out the personal care function (e.g. bristles in a toothbrush for cleaning teeth, razors in a shaver for shaving hairs, bristles in hairbrush for combing hair etc.).

The processor may be configured to process the 3D volume by determining topological characteristics of the 3D volume and inputting the topological characteristics into a regression algorithm, wherein the regression algorithm is configured to output the user-induced motion characteristics and/or the future motion characteristics.

The use of the topological characteristics enables a reduction in data which needs to be processed (e.g. input into the regression algorithm) whilst maintaining an accurate depiction of the 3D volume. This reduces the time taken to process the 3D volume.

The topological characteristics may include one or more of connectedness, a distance matrix, topological signatures, local shapes and point signatures.

The processor may be further configured to receive motion related sensor data from a sensor arrangement on the personal care device, the sensor data being indicative of a motion of the personal care device and/or of the personal care elements, and to use the sensor data when processing the 3D volume.

The sensor data can include data of the personal care device such as gyroscopic data, acceleration/velocity data, pressure data, drive current or drive voltage to motor etc. This data can improve the accuracy of the output of the regression algorithm when processing the 3D volume.

The processor may be further configured to generate a clean image from the sequence of images using the personal care elements segmented from the sequence of images, wherein the clean image is an image of the user with the personal care elements removed.

The processor may be configured to use the future motion characteristics and/or the user-induced motion characteristics in the segmentation of the personal care elements from the sequence of image.

The processor may be further configured to adapt, using the user-induced motion characteristics and/or the future motion characteristics, one or more parameters of one or more of the imaging device, a light source of the personal care device, the personal care device, the personal care elements and the personal care function.

The personal care device may be an electric toothbrush and the processor may adapt the cleaning frequency of the electric toothbrush based on the future motion characteristics. For example, the future motion characteristics may indicate the electric toothbrush is going to move to a specific area or orientation and the cleaning frequency could be adapted accordingly.

The personal care device may be a manual toothbrush and the processor may adapt the bristles length and/or stiffness as a function of the anatomy to be cleaned next. For example, the future motion characteristics may be used to predict which anatomy will be cleaned next.

The acquisition parameters of the imaging device could also be adapted as a function of the anatomy to be cleaned next (and therefore imaged next).

The personal care device may be an electric razor and the processor may adapt the razor motor current as a function of the anatomy to be cleaned next. For example, if the skin is going to move to a more sensitive area of the user (e.g. detected redness) the movement of the razor elements may become gentler. In contrast, if there is more/thicker hairs in the next predicted area then there may be an increase in the shaving power from the motor current.

The personal care device may be a manual razor and the processor may adapt the stiffness of the razor elements as a function of the anatomy to be imaged next.

The personal care device may be an electric hairbrush and the processor may adapt the modulation of the bristles on the electric hairbrush as a function of the anatomy to be imaged next. In one example, the processor may be further configured to forecast the arrival at one or more knots based on the future motion characteristics and clean images of the user's anatomy containing one or more hair knots. Thus, the processor may be further configured to adapt the modulation of the bristles based on the forecasted arrival at one or more knots.

The personal care device may be a manual hairbrush and the processor may be configured to adapt the length and/or the stiffness of the bristles based on the future motion characteristics.

The motion characteristics may be measured using sensors on the personal care device or on the user (e.g. sensors on a smart watch etc.).

The invention also provides a personal care system comprising:
personal care device having personal care elements;
an imaging device mounted at a head of the personal care device;
the afore-mentioned image processing system; and
a light source adapted to illuminate the field of view of the imaging device.

The personal care device may be, for example, a toothbrush, a hairbrush, a shaver or a skin cleansing brush.

The light source may be a light emitting diode, LED.

The invention also provides an image processing method for processing images received from an imaging device mounted at a head of a personal care device having personal care elements which can move relative to the imaging device user to implement a personal care function, the method comprising:
receiving a sequence of images over time of a user from the imaging device at the head of the personal care device;
segmenting the personal care elements from the sequence of images;
constructing a three dimensional, 3D, volume based on the time evolution of the shape of the segmentations; and
processing the 3D volume to:
   determine user-induced motion characteristics of the personal care elements; and/or
   forecast future motion characteristics of the personal care elements.

Processing the 3D volume may comprise determining topological characteristics of the 3D volume and inputting the topological characteristics into a regression algorithm, wherein the regression algorithm is configured to output the user-induced motion characteristics and/or the future motion characteristics.

The topological characteristics may include one or more of connectedness, distance matrix, topological signatures, local shapes and point signatures.

The method may further comprise receiving motion related sensor data from a sensor arrangement on the personal care device, the sensor data being indicative of a motion of the personal care device and/or of the personal care elements; and using the sensor data to process the 3D volume.

The method may further comprise adapting, using the user-induced motion characteristics and/or the future motion characteristics, one or more parameters of one or more of the imaging device, the light source, the personal care device, the personal care elements and the personal care function.

The invention also provides a computer program comprising computer program code which is adapted, when said program is run on a computer, to implement the afore-mentioned image processing method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a camera placed on a toothbrush with bristles;
Figure 2 shows a camera placed on a hairbrush with bristles;
Figure 3 shows a camera placed on a shaver with shaving elements;
Figure 4 shows a method for forecasting the motion of the personal care elements;
Figure 5 shows a snapshot of a 3D volume from a first view;
Figure 6 shows a snapshot of the 3D volume from a second view;
Figure 7 shows a snapshot of the 3D volume from a third view;
Figure 8 shows a snapshot of the 3D volume from a fourth view; and
Figure 9 shows a standard deviation projection of the 3D volume from the fourth view.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an image processing system which processes images received from an imaging device mounted at a head of a personal care device. The personal care device has personal care elements which can move relative to the imaging device while they implement their personal care function. Images are received over time of a user from the imaging device. The images are segmented and three dimensional data is generated based on the time evolution of a shape of the segmentations. The 3D volume enables current motion characteristics, including user induced ones, of the personal care elements and/or future motion characteristics of the personal care elements to be determined.

Personal care devices enable consumers to execute their personal health care routines in an easy way. For this reason, it is important to guide the consumer in such a manner that they reach all spots or use the device in the optimal way. One way to achieve this goal is to execute image and video acquisitions during the personal care routine. This image data can be used, for example, to guide the consumer to spots that have not been, for example, brushed/shaved adequately or to check for possible pathologies by creating a (video) history of the user anatomy/physiology.

There exist image processing algorithms to identify, lock and forecast moving objects. It is proposed to use these algorithms for enabling the removal of the moving/rotating element (e.g. bristles, blades etc.) from the pictures and videos acquired with an imaging device (e.g. camera) mounted in the brushing/shaving head including when the user interferes with the natural/free movements of the bristles/blades with her/his own movements (including applying pressure, moving etc.). Moreover, the proposed algorithms instead may be used to enable removing images of the user's hair from the field of view.

This can vastly improve both the quality of the user experience (usability of the images, enjoyability and aesthetics appeal) and the information quality and quantity that can be derived from the device images themselves. This can also improve any eventual use of the images for diagnostics use.

Miniaturized cameras with current technology can be easily placed almost everywhere in a personal care device (e.g. a toothbrush, a shaver, a hairbrush etc.). There are considerations of mechanical and optical nature to be made.

The problem to be addressed arises from positioning the camera in the head of the device.

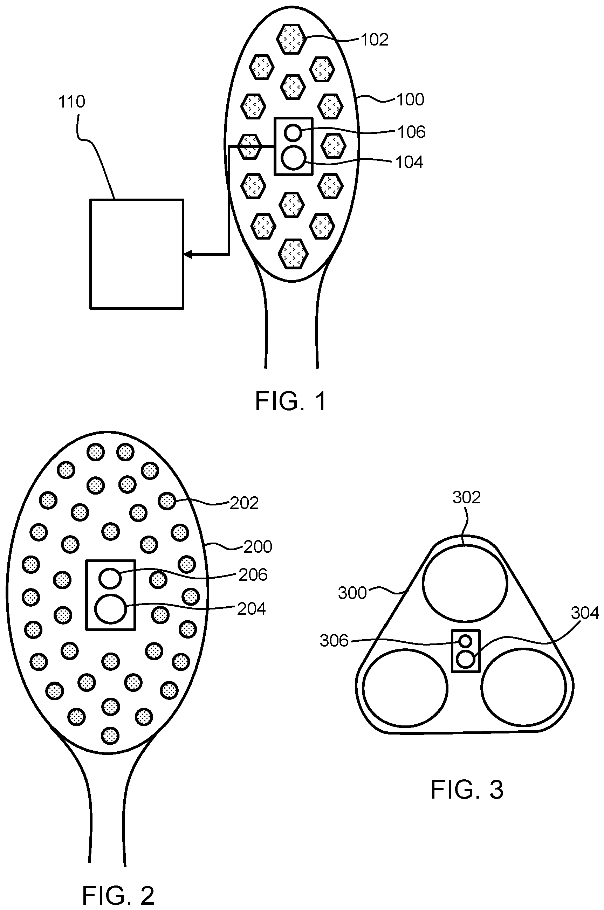

Figures 1, 2 and 3 show a camera placed on different personal care devices. Figure 1 shows a camera 104 placed on a toothbrush 100 with bristles 102. Figure 1 also schematically shows a processor 110 for performing the image processing described below.

Figure 2 shows a camera 204 placed on a hairbrush 200 with bristles 202. Figure 3 shows a camera 304 placed on a shaver 300 with shaving elements 302.

For the purpose of the following description, it can be assumed that the optical environment for the image acquisition is optimal in terms of illumination, lens etc., or at least provides adequate images for the purpose of image processing. This can be partly achieved, for example, by having illumination devices 106, 206 and 306 on the personal care devices. The lens arrangement on the cameras 104, 204 and 304 can also be optimized for the particular use.

More importantly, there are three main mechanical aspects to consider for the personal care devices:
- The intended functional movement of the personal care elements 102, 202 and 302. This could include the type of oscillation, the plane of oscillation, the rate of rotation etc. This is particularly important for powered personal care devices (e.g. powered toothbrushes, shavers etc.).
- The geometry of the personal care elements 102, 202 and 302.
- The generally random, user-induced, modification of the movement of the personal care elements 102, 202 and 302.

Both the cameras and the personal care elements are typically rigidly connected to the personal care device. Due to this interlocking, the overall movements of the personal care device induced by the user during use of the personal care device do not significantly interfere with the functional movement of the personal care elements.

However, there is movement variability resulting from user actions that influence, directly and/or indirectly, the functional movements of the personal care elements. For example, the oscillation frequency and phase of rotating personal care elements may be affected. The plane of movements (e.g. the plane of rotation of the shaver elements 302) can also be affected.

In the case of bristles, the user-applied pressure can also change the linear movements of the bristles, for example causing the bristles 102 to bend.

Thus, there is a need to address the variations in dynamics of the personal care elements during use of the personal care devices.

In toothbrushes, such as the toothbrush 100 shown in Figure 1, the bristles 102 can have a high variability due to the bristles 102 having, potentially, many different geometries specialized for specific purposes (e.g. gum types etc.) or simply because of new, more optimized, versions.

However, with regard to the functional movement of the bristles 102 (in the context of powered toothbrushes), the plane of rotation of the bristles is generally well defined in a vertical oscillation place (with respect to the user teeth plane). This is because powered toothbrushes are typically limited in the plane in which they can rotate.

In the case of shavers, such as shaver 300 shown in Figure 3, almost the opposite is true. In this case, the rotation frequency is generally well defined, but the plane of rotation is not. Changes in the plane of rotation of the shaver elements 302 can change how many of the shaver elements occlude the view of the camera 304.

This is because the shaver 300 conforms to the user's anatomy depending on the user input. This causes the shaver elements 302 to tilt in various directions to conform to the user's anatomy. The tilting of the shaver elements 302 can vary how many of, and/or where and when, the shaver elements 302 obstruct the field of view of the camera 304.

For the sake of brevity, the following description will be given regarding a powered toothbrush. However, it should be appreciated that the same considerations are valid, with minor adjustments, for the general case of personal care devices including shavers, hairbrushes etc.

In the case of a powered toothbrush, the oscillation of the bristles implies that the bristles will be contacting the teeth and may drag and flex during the oscillation. The amount of drag and flex on the bristles will, at least partly, depend on the user's applied force and movement type. This mechanical behavior will likely bring some bristles into the field of view (FOV) of the camera. Additionally, the amount, shape and geometry of the bristles in the FOV of the camera will likely also change over time due to the (pseudo-)random nature of the user's interaction with the toothbrush.

Such variable occlusions of the teeth in the images from the camera are a problem which is addressed herein. The same reasoning applies to a hairbrush with an included camera (i.e. the bristles from the hairbrush will occlude the anatomy of the user variably over time) and a shaver with an included camera (i.e. the change in rotation plane will occlude the anatomy of the user variably over time). In fact, the same reasoning applies to any personal care device with personal care elements which variably occlude the FOV of a camera integrated into the personal care device over time when the personal care device is in use.

Regarding the bristles of a toothbrush, it is noted that the positions of the bristles and the geometry, density etc. of the bristles can change with the type of brush head on the toothbrush. These changes can imply a reduced unobstructed FOV for the head mounted camera. Of course, this problem could be solved by using appropriate camera optics (e.g. read focal length, field of view etc.) but this requires a costly and laborious adaptation of the optics to these mechanical properties. Moreover, the random nature of the user interactions makes this mechanical approach inefficient since it can be optimized once only before delivery of the toothbrush.

Instead, it is proposed to use software algorithms able to automatically adapt to the changing nature of the oscillations of the bristles and to cancel the interference of the bristles from the acquired images and videos.

The proposed algorithm allows for a clearer imaging of the underlying user anatomy.

Use of the algorithms can also be an enabler for a more accurate image analysis used to, for example, detect caries or plaque, or a general problem in the denture or the general anatomy under care (skin etc.).

The illumination devices 106, 206 and 306 shown in Figures 1, 2 and 3 respectively may be a light emitting diode (LED). The LED may be a white/visible light source of known physical characteristics (including illumination frequency, duty cycle etc.).

A processor may be used to perform a mixed classification-regression task of the positions of the bristles in the images from the camera and their forecasted oscillation/rotation frequency. This will be described in more detail below.

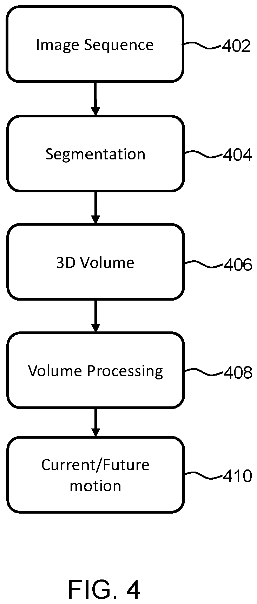

Figure 4 shows a method for forecasting the motion of the personal care elements. An image sequence of the user anatomy (i.e. teeth, skin, hairs etc.) is obtained during use of the personal care device (i.e. brushing, shaving etc.) in step 402.

Consideration should be given to suitable positions for the camera. Since the focus is to the elimination of the bristles from the FOV of the camera while vibrating, potential positions include placing the camera in or around the brush head in the same plane as the actual brush head or in a different plane as the brush head.

In these solutions, the bristle's functional movements can be of any type (e.g. fixed, linear, rotational etc.).

A light source may be used to illuminate the area from which pictures are being taken. Ideally, this is an LED. An advantage of LEDs is that they can be triggered easily, facilitating subsequent images to be taken with the same or similar bristle orientation.

Additionally, the following information can be useful in the following processing steps:
- The free/functional movement of the bristles (e.g., free vibration, rotation frequency or linear speed etc.);
- The geometry of the bristles;
- The camera acquisition characteristics (e.g. resolution in pixels, exposure time, frame acquisitions per second, acquisition time, global shutter or rolling shutter etc.); and
- The camera optical characteristics (read focal length, field of view etc.).

In most cases, it will likely be assumed that the camera acquisition and/or optical characteristics are optimal for the conditions. However, it is possible to use said characteristics to filter the images. For example, if the vibration frequency of the bristles coincide with the frame rate of the camera, the bristles could appear stationary in the sequence of images. Thus, these images could be filtered out. In some cases, it may also be possible to adapt the frame rate (or other characteristics) based on the sequence of images or even the field of view of the camera may be adaptive to the content of the images.

If available, the data from various onboard sensors available in the toothbrush (e.g. inertia monitoring unit, pressure, motor/s current etc.) can also be used in the following processing steps.

The central hypothesis is that the user induced motion induces physical modifications reflected in the shape of the envelope of the bristles that correlate to the frequency of the motion they are now exhibiting.

An algorithm starts accumulating the image sequence from the camera and, potentially, performs simple image processing adjustments and/or analysis on it (e.g. to remove blurry images etc.).

The bristles are segmented from the sequence of images in step 404. This may be performed by an online video semantic segmentation task using a pre-trained unsupervised deep learning network (i.e., unsupervised domain adaptation, reinforcement learning etc.) that uses as inputs both the video frames and the sensor data. An envelope is obtained which representative of the shape of the bristles from the view of the camera. In other words, an envelope is obtained which shows the position of the bristles in the images.

The geometry of the bristles (and/or any physical characteristics of the bristles) could be used during the segmentation step in order to improve the accuracy of the segmentation. For example, the geometry of the bristles and/or the color of the bristles could be used as additional constraints to the segmentation step.

The envelope of the global shape of the extracted bristles is then represented in a 3D dataset. This dataset is 3D in that it comprises 2D image data captured by the camera over time, thus comprising three dimensions. This three dimensional dataset will be referred to as a "3D volume", but it should be understood that the data volume has two spatial dimensions and one time dimension. In other words, the 3D volume is a stack of the 2D envelopes output at the segmentation step.

The 3D volume is generated in step 406. This volume thus represents the temporal evolution of the 2D shape of the bristles in the captured images. The topological features (connectivity etc.) of such volumes have been found to directly correlate to the motion properties of the bristles and vice versa.

For new image frames, the new extracted bristle shape envelopes are merged in the semantic image/frame segmentation result and then added to the global 3D volume (two spatial dimensions and one temporal) deriving from the previous segmentations of the video.

At the start of the operations, the global 3D volume may be empty. Thus, with each new image in the image sequence (or group of new frames), the 3D volume can be updated with the shape envelope of the new image.

In a general sense, the 3D volume is then processed in step 408 to extract a current, user induced, motion of the bristles (e.g. movement type, speed, frequency etc.) and/or a future motion (i.e. a forecast of the motion at a future time) in step 410. In practice, an example of how to process the 3D volume includes determining the topological characteristics of the 3D volume and processing the topological characteristics to output the current motion and/or the future motion. This is because, although the 3D volume includes all the necessary information for determining the current, user-induced, motion and a future motion, the 3D volume consists of a large amount of data. Processing the whole 3D volume would require a large amount of processing power. Thus, it is proposed to calculate the topological characteristics of the 3D volume and use them as input data to determine the current, user-induced, motion and/or the forecasted motion.

The topological characteristics (i.e., connectivity, distance matrix, topological signatures, local shapes, point signatures in 3D etc.) of the 3D volume can be determined and updated with the new data and the forecasted positions difference from the previous video frame.

The topological characteristics extracted as explained above can be used as inputs to a regression algorithm (e.g. a motion flow algorithm, a trained machine learning/deep learning algorithm etc.) to determine both the current, user-induced, bristle motion and a forecasted bristle motion. The motion of the bristles may include a still position, any linear movement, any rotational movement, any oscillatory movement, the frequency, the velocity etc.

The data from the sensors of the toothbrush (e.g. IMU, pressure etc.) may also be input into the regression algorithm with the topological characteristics.

In practice, the output of the overall algorithm (i.e. including both the segmentation and the regression algorithms) is then the following:
- Detection and elimination from the video frames/images of the bristles or blades.
- Determining the physical quantities connected to the actual motion of the bristles or blades including the user-induced motion.
- Forecasting of the future positions of the bristles or blades according to an estimated future motion.

Determination of the user-induced motion of the bristles can be improved if the sensor data from the toothbrush is input to the regression algorithm. For example, knowledge of the pressure of the toothbrush on the teeth may improve the determination of how much the bristles are bending.

Similarly, knowledge of the bristle free movement (e.g. rotation frequency with no user-induced motion) can further aid the regression algorithm in differentiating between user-induced motion and the motion caused by the free movement of the bristles.

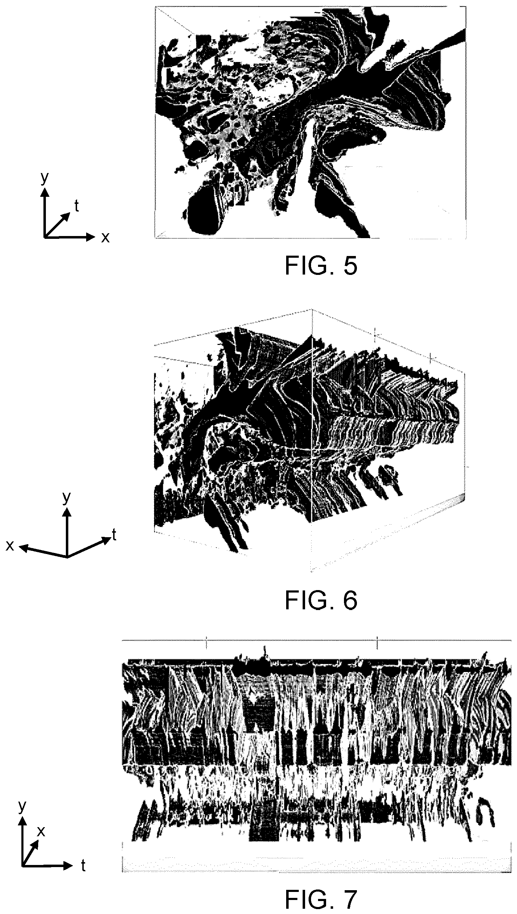

Figure 5 shows a snapshot of a 3D volume from a first view. The darker regions represent the shape of bristles occluding the FOV of a camera on a toothbrush. The x and y axes are spatial axes whilst the t axis is a temporal axis.

Figure 6 shows a snapshot of the 3D volume from a second view. As can be seen from this view, the shape of the bristles stays somewhat constant but does change. Random changes in the 3D volume are more visible in Figure 7.

Figure 7 shows a snapshot of the 3D volume from a third view. In this view, random and sudden changes can be seen in the 3D volume whilst the overall general shape stays somewhat similar over time.

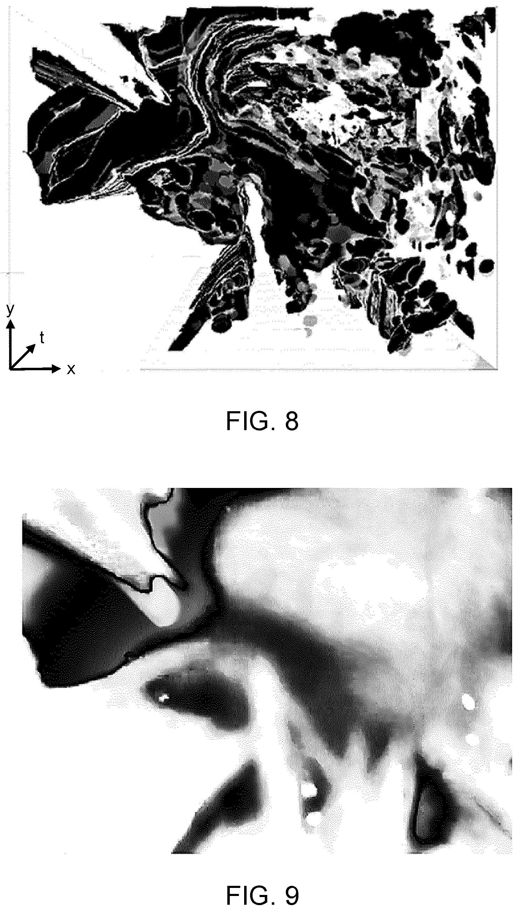

Figure 8 shows a snapshot of the 3D volume from a fourth view. This view is similar to that of Figure 5, but from the other side of the 3D volume.

Figure 9 shows a standard deviation projection of the 3D volume from the fourth view. The darker regions generally represent a smaller standard deviation, thus indication regions which are more likely to stay covered by the bristles over time.

Figures 5 to 9 show how changes in the position of the bristles (i.e. caused by the bristles moving) can manifest themselves in the 3D volume. These changes in the 3D volume affect the topological characteristics thereof.

In essence, the regression algorithm previously discussed is designed to estimate the relationship between the 3D volume (or, preferably, the topological characteristics thereof) and time. Other variables can also be considered in the relationship, such as the free movement of the bristles and the data from sensors in the toothbrush.

One of the unknown variables considered for the regression algorithm may be the user-induced motion of the bristles. The user-induced motion can be differentiated from the overall motion of the bristles (represented by the changes in the 3D volume) in that the overall motion is (generally) a combination of the user-induced motion and the free-movement of the bristles. The user-induced motion is motion of the bristles (or other personal cleaning elements) induced by the motion of the user and not by the free movement of the bristles (i.e. how the bristles would be expected to move without any motion induced by the user).

Once a relationship between the 3D volume and time has been estimated, the relationship can be extended into the future to predict what the shape of the 3D volume will be (or, at least, what the topological characteristics will be) in the future. This forecasting provides a prediction of the future motion of the bristles. In general, the forecasted future motion will indicate motion which is expected if the user does not induce any further motion.

Regression algorithms, in general, typically have two distinct purposes: forecasting and estimating relationships between variables. In this case, both purposes can be made use of to forecast the motion of the bristles and determine the effect of the user-induced motion in the relationship between the 3D volume and time.

The form of the regression algorithm (e.g. using pre-existing motion flow regression algorithms or training a deep learning algorithm for this purpose) may then depend on the particular implementation. For example, the intended processor to be used may factor into the complexity of the algorithm as, the more complex the algorithm is, the more processing power which will be required.

The user-induced motion and/or the forecasted bristle motion can be used in a variety of ways. One of the uses of this information is the generation of a clean image of the anatomy (e.g. the mouth of the user or the skin of the user). The forecasted future motion can be used as an input to a segmentation algorithm to improve the accuracy and/or speed of the segmentation. In fact, the forecasted motion can be used in the afore-mentioned segmentation algorithm. This could then enable the output of a clean image of the anatomy (i.e. without moving parts) which can then be further used.

Thus, the forecasted future motion can enable an improved segmentation of the personal care elements from the images (e.g. for the next frame).

The user-induced motion can also be used to improve the segmentation of the personal care elements from the images. For example, the user-induced motion can be used to indicate how similar a clean image is expected to be to the previous clean image. For example, if the user-induced motion indicates the user has not moved significantly between frames, it may be expected that the next segmented image will be similar to the previous segmented image.

The clean images can be used to generate a map of the anatomy and/or detect the presence of any potential pathologies. This information can be used to modulate the free movement of the personal care elements. For example, the frequency of the bristles in a toothbrush can be adapted based on the obtained map of the anatomy and/or the known presence of a (general) pathology. In areas where the user is known to have a sensitive anatomy (e.g. bleeding or redness during use), the free movement can be adapted to lower the effect of the personal care elements on that area. The map of the anatomy could also be used to modify the free movement based on the area which is being treated (e.g. frequency of bristles on gum lower than frequency of bristles on teeth). As will be appreciated, knowledge of the forecasted future motion enables the free movement of the personal care devices to be adapted pre-emptively.

Of course, knowledge of the user-induced motion also provides further information for when the free movement should be adapted. For example, when user is exerting a relatively high pressure on the bristles of a toothbrush against their teeth (e.g. indicated by a large bending of the bristles), it could be expected that the user is still cleaning that area and thus will not move to the next area until the pressure is somewhat reduced.

The map of the anatomy and/or the presence of any pathology could also be used to adapt the physical properties of the personal care elements or even recommend personal care devices with more suitable physical properties. For example, the length and/or stiffness of bristles in a toothbrush could be adapted from the map of the anatomy and/or the presence of any pathology. Similarly, the stiffness of blades in a manual shaver can be adapted or a different blade stiffness can be recommended. As above, knowledge of the forecasted future motion and/or the current, user-induced, motion can enable a pre-emptive adaptation of the physical properties.

The forecasted motion of the bristles could be used to anticipate the anatomy which will be imaged next and thus adapt the physical properties pre-emptively. Similarly, the user-induced motion could indicate whether the user is focusing on using the personal care device on a specific area or whether they will likely move to the next area. For example, if there is no, or little, user-induced motion, this could indicate the user has recently moved to this area and will begin using the personal care device on this area, or that the user has finished on this area and will likely move on to the next area.

The map of the anatomy and/or the presence of pathologies can also be used to adapt the camera acquisition characteristics. For example, for areas which are known to be darker or include a pathology, the illumination of an LED of the camera could be increased (and/or increase exposure time of the camera). The frame rate (i.e. acquisition frequency) could also be adapted as a function of the anatomy which is being imaged or will be imaged next. This could also use the forecasted future motion of the bristles to anticipate which area of the anatomy will be imaged next and thereby pre-emptively change the camera acquisition characteristics.

In the case of a shaver, the forecasted future motion could be used to anticipate the area which will be shaved next. If the anticipated area is known to have sensitive skin, the motor current driving the razor could be adapted accordingly (i.e. reduce motor speed to provide gentler shaving). Similarly, if the anticipated area is known to have more, or thicker, hairs, the motor speed can be increased.

The user-induced motion can be used, in the case of a shaver, to determine whether the properties of the shaver need to be adapted. For example, if the plane of the shaver elements is tilted by a relatively large amount, this may indicate the user is trying to shave a relatively difficult area and thus inducing more motion on the shaver elements than usual. As such, a large amount of user-induced motion on the shaver elements could indicate that the motor current driving the shaver elements may need to be increased.

In some cases (e.g. hairbrush and shaver), the presence of hairs can be further taken into consideration. For example, it is possible to correlate the shape of hair bundles present in the images to the optimal bristle movements (linear and rotational) needed to disentangle the bundle in an optimal amount of time, energy and, principally, lower bristles-bundle interlocking time that can lead to perceived pain.

The forecasted motion can be used to anticipate the arrival of the hairbrush at a hair knot/bundle. The user could be alerted of this and/or the stiffness/length of the bristles of a hairbrush can be reduced accordingly.

The user-induced motion could be used to determine the presence of a knot (e.g. not visible in the images). For example, if a sub-set of the bristles on a hairbrush bend more than the rest (i.e. the user-induced force is higher for a sub-set of the bristles), this may indicate the presence of a knot.

It is noted that the hairs could also be segmented out of the images to obtain clean images of the anatomy covered by the hairs and the bristles. A method for identifying the hairs (thereby enabling the segmentation thereof) may comprise using hyperspectral imaging to differentiate the hairs from skin (or other anatomical features). For example, the images may be separated into red, green and blue channels and compared to identify the hairs. Depending on the hair color and the skin color, color-based segmentation could also be used.

The skilled person would be readily capable of developing a processor for carrying out any herein described method. Thus, each step of a flow chart may represent a different action performed by a processor, and may be performed by a respective module of the processor.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. An image processing system for processing images received from an imaging device (104, 204, 304), mounted at a head of a personal care device (100, 200, 300) having personal care elements (102, 202, 302) which can move relative to the imaging device to implement a personal care function, comprising:
a processor (110), which is configured to:
receive a sequence of images over time of a user from the imaging device at the head of the personal care device;
segment the personal care elements from the sequence of images;
construct a three dimensional, 3D volume representing the time evolution of a 2D shape of the segmentations; and
process the 3D volume to:
determine user-induced motion characteristics of the personal care elements and/or the personal care device; and/or
forecast future motion characteristics of the personal care elements and/or the personal care device.

2. The system of claim 1, wherein the processor is configured to process the 3D volume by:
determining topological characteristics of the 3D volume; and
inputting the topological characteristics into a regression algorithm, wherein the regression algorithm is configured to output the user-induced motion characteristics and/or the future motion characteristics.

3. The system of claim 2, wherein the topological characteristics include one or more of:
connectedness;
a distance matrix;
topological signatures;
local shapes; and
point signatures.

4. The system of any one of claims 1 to 3, wherein the processor is further configured to receive motion related sensor data from a sensor arrangement on the personal care device, the sensor data being indicative of a motion of the personal care device and/or of the personal care elements, and to use the sensor data to process the 3D volume.

5. The system of any one of claims 1 to 4, wherein the processor is further configured to generate a clean image from the sequence of images using the personal care elements segmented from the sequence of images, wherein the clean image is an image of the user with the personal care elements removed.

6. The system of any one of claims 1 to 5, wherein the processor is configured to use the future motion characteristics and/or the user-induced motion characteristics in the segmentation of the personal care elements from the sequence of image.

7. The system of any one of claims 1 to 6, wherein the processor is further configured to adapt, using the user-induced motion characteristics and/or the future motion characteristics, one or more parameters of one or more of:
the imaging device;
a light source (106, 206, 306) of the personal care device;
the personal care device;
the personal care elements; and
the personal care function.

8. A personal care system comprising:
personal care device (100, 200, 300) having personal care elements (102, 202, 302);
an imaging device (104, 204, 304) mounted at a head of the personal care device;
the image processing system of any one of claims 1 to 7; and
a light source (106, 206, 306) adapted to illuminate the field of view of the imaging device.

9. The personal care system of claim 8, wherein the light source is a light emitting diode, LED.

10. An image processing method for processing images received from an imaging device mounted at a head of a personal care device having personal care elements which can move relative to the imaging device user to implement a personal care function, the method comprising:
receiving (402) a sequence of images over time of a user from the imaging device at the head of the personal care device;
segmenting (404) the personal care elements from the sequence of images;
constructing (406) a three dimensional, 3D, volume based on the time evolution of the shape of the segmentations; and
processing (408) the 3D volume to:
determine user-induced motion characteristics of the personal care elements; and/or
forecast future motion characteristics of the personal care elements.

11. The method of claim 10, wherein processing the 3D volume comprises:
determining topological characteristics of the 3D volume; and
inputting the topological characteristics into a regression algorithm, wherein the regression algorithm is configured to output the user-induced motion characteristics and/or the future motion characteristics.

12. The method of claim 11, wherein the topological characteristics include one or more of:
connectedness;
distance matrix;
topological signatures;
local shapes; and
point signatures.

13. The method of any one of claims 10 to 12, further comprising:
receiving motion related sensor data from a sensor arrangement on the personal care device, the sensor data being indicative of a motion of the personal care device and/or of the personal care elements; and
using the sensor data to process the 3D volume.

14. The method of any one of claims 10 to 13, further comprising adapting, using the user-induced motion characteristics and/or the future motion characteristics, one or more parameters of one or more of:
the imaging device;
a light source of the personal care device;
the personal care device;
the personal care elements; and
the personal care function.

15. A computer program comprising computer program code which is adapted, when said program is run on a computer, to implement the method of any one of claims 11 to 14.
